# EUROPÄISCHE PATENTSCHRIFT

(11) **EP 3 705 993 B1**
(45) Veröffentlichungstag und Bekanntmachung des Hinweises auf die Patenterteilung: **21.07.2021**
(21) Anmeldenummer: 19160453.7
(22) Anmeldetag: 04.03.2019
(51) Int. Cl.: G06F 9/50

(54) **SYSTEM UND VERFAHREN ZUM AUFFINDEN UND IDENTIFIZIEREN VON RECHENKNOTEN IN EINEM NETZWERK**
SYSTEM AND METHOD FOR LOCATING AND IDENTIFYING COMPUTING NODES IN A NETWORK
SYSTÈME ET PROCÉDÉ DE DÉTECTION ET D'IDENTIFICATION DES N UDS DE CALCUL DANS UN RÉSEAU

(43) Veröffentlichungstag der Anmeldung: 09.09.2020
(73) Patentinhaber: Siemens Aktiengesellschaft, 80333 München (DE)
(72) Erfinder: Mittermeier, Ludwig Andreas, 81541 München (DE)

(56) Entgegenhaltungen:
- US-A1- 2014 196 054
- US-A1- 2018 129 495

## Beschreibung

Die Erfindung betrifft ein System und Verfahren zum Auffinden und Identifizieren von Rechenknoten in einem Netzwerk.

Fog-Computing oder Fog-Networking, auch als Fogging bezeichnet, ist eine Architektur, die Randgeräte verwendet, um einen erheblichen Teil der Berechnungen, Speicher, Kommunikation lokal und über das Internet-Backbone auszuführen. Sowohl Cloud-Computing als auch Fog-Computing bieten Endbenutzern und industriellen Anwendern Speicher, Anwendungen und Daten. Allerdings hat Fog-Computing eine größere Nähe zu den Endnutzern und eine größere geografische Verteilung.

Fog-Computing umfasst die Verteilung der Kommunikations-, Berechnungs- und Speicherressourcen und -services auf oder in der Nähe von Geräten und Systemen, die Endbenutzer steuern. Fog Computing ist kein Ersatz, sondern oft eine Ergänzung zum Cloud Computing.

In Fog/Edge-Computing-Umgebungen werden rechnerische Arbeitslasten (Workloads) auf geeignete Rechenknoten verteilt, auf denen sie ausgeführt werden. Beispiele für Anwendungen sind im Automobilbereich beispielsweise Fahrassistenzsysteme und Rechnersysteme für autonomes Fahren, im medizinischen Bereich eine Vielzahl von diagnostischen Instrumenten im Krankenhaus und in Arztpraxen, in der industriellen Fertigung Montagestraßen und Herstellungsmaschinen wie beispielsweise CNC-Maschinen.

Allerdings besteht häufig ein Problem darin, einen oder mehrere geeignete Rechenknoten für eine bestimmte Anwendung zu identifizieren und zu finden, da die Rechenknoten über unterschiedliche Eigenschaften verfügen wie bespielweise unterschiedliche Prozessoren und Speicherkapazitäten.

Bisher werden geeignete Rechenknoten dadurch identifiziert, dass die Eigenschaften der Rechenknoten sowie die Kennzeichen der Arbeitslast (workload) von Entwicklern und Bedienpersonal manuell festgelegt werden. Ein Verarbeitungssystem identifiziert geeignete Rechenknoten für eine gegebene Arbeitslast anhand der Eigenschaften der Rechenknoten, wobei entweder eine Teilmenge oder der gesamte Satz von Eigenschaften und Fähigkeiten der Rechenknoten erkannt wird. Falls ein Rechenknoten für eine Berechnungsaufgabe gefunden wurde, wird dieser Rechenknoten auch verwendet. Es wird allerdings nicht geprüft, ob möglicherweise geeignetere Rechenknoten zur Verfügung stehen, um die Auslastung des gesamten Netzwerks bzw. Rechenclusters zu optimieren und/oder eine bessere oder schnellere Verarbeitung für eine jeweilige Arbeitslast zu erreichen.

Die Druckschrift US 2014/196054 A1 beschreibt ein Verfahren zum Ausgeben eines Befehls für ein Ausführen verkürzter Leistungsmessungen für einen oder mehrere Rechnerknoten, um zu bestimmen, ob eine Anzahl von einem oder mehrerer Rechenknoten ausreichend ist, auf denen eine Berechnung durchgeführt werden kann.

Die Druckschrift US 2018/129495 A1 beschreibt ein Verfahren für das Verwalten von Software. Um Software auszuführen, wird durch einen Manager ein Request mit einer bestimmten Anforderung versendet, womit ein optimales Computergerät für die Ausführung der Software ermittelt werden soll. Nach der Auswahl des optimalen Computergerätes wird die Software an das ausgewählte Computergerät zum Bearbeiten gesendet.
Die der Erfindung zu Grunde liegende Aufgabe besteht nun darin, ein System und ein Verfahren zur verlässlichen Identifizierung und Auswahl von Rechenknoten in einem Netzwerk bzw. Rechencluster anzugeben, das sich durch eine hohe Zuverlässigkeit und Sicherheit auszeichnet und eine verbesserte Ressourcenplanung und -auslastung von Netzwerksystemen und damit deren Optimierung ermöglicht.

Diese Aufgabe wird hinsichtlich eines Systems durch die Merkmale des Patentanspruchs eins, und hinsichtlich eines Verfahrens durch die Merkmale des Patentanspruchs vier erfindungsgemäß gelöst. Die weiteren Ansprüche betreffen bevorzugte Ausgestaltungen der Erfindung.

Die Erfindung betrifft gemäß einem ersten Aspekt ein System zum Auffinden und Identifizieren von Rechenknoten in einem Netzwerk mit den Merkmalen des Anspruchs 1.

Gemäß der Erfindung ist die Sonde in die Softwareapplikation integriert, und das Planungsmodul ist geeignet, die Softwareapplikation mit der Sonde an die Rechenknoten zu schicken. Wenn die Sonde die Eignung eines Rechenknotens feststellt, kann somit sofort mit der Ausführung der Softwareapplikation begonnen werden.

Vorteilhafterweise enthält die Sonde ein Klassifizierungsschema mit verschiedenen Kategorien für die Klassifizierung der Rechenknoten, und die Sonde ist ausgebildet, die Rechenknoten mittels dieses Klassifizierungsschemas zu testen. Hierdurch kann schnell eine Einordnung der getesteten Rechenknoten in ein Ordnungsschema erfolgen.

Gemäß einer weiteren vorteilhaften Weiterentwicklung der Erfindung ist das Planungsmodul geeignet, unterschiedliche Softwareapplikationen anhand der Testergebnisse der Sonde für die Arbeitslast der unterschiedlichen Softwareapplikationen in einer Sequenz unter Verwendung verschiedener Rechenknoten abzuarbeiten.

Die Erfindung betrifft gemäß einem zweiten Aspekt ein Verfahren zum Auffinden und Identifizieren von Rechenknoten in einem Netzwerk mit den Merkmalen des Anspruchs 6.

Gemäß der Erfindung ist die Sonde in die Softwareapplikation integriert, und das Planungsmodul schickt die Softwareapplikation mit der Sonde an die Rechenknoten. Wenn die Sonde die Eignung eines Rechenknotens feststellt, kann somit sofort mit der Ausführung der Softwareapplikation begonnen werden.

Vorteilhafterweise enthält die Sonde ein Klassifizierungsschema mit verschiedenen Kategorien für die Klassifizierung der Rechenknoten und die Sonde testet die Rechenknoten mittels dieses Klassifizierungsschemas. Hierdurch kann schnell eine Einordnung der getesteten Rechenknoten in ein Ordnungsschema erfolgen.

In einer weiteren Ausgestaltung der Erfindung ist das Planungsmodul geeignet, unterschiedliche Softwareapplikationen anhand der Testergebnisse der Sonde für die Arbeitslast der unterschiedlichen Softwareapplikationen in einer Sequenz unter Verwendung verschiedener Rechenknoten abzuarbeiten.

Die Erfindung betrifft gemäß einem dritten Aspekt ein Computerprogrammprodukt, umfassend einen und/oder mehrere ausführbare Computercodes, der(die) dazu ausgebildet ist(sind) (z.B. durch einen Computer), ein Verfahren gemäß einer Ausführungsform des ersten Aspekts durchzuführen.

Nachfolgend wird die Erfindung anhand von in der Zeichnung dargestellten Ausführungsbeispielen näher erläutert.

Dabei zeigen:
- Figur 1: eine Übersichtsdarstellung zur Erläuterung eines erfindungsgemäßen Systems;
- Figur 2: ein Blockdiagramm zur Erläuterung eines Ausführungsdetails des erfindungsgemäßen Systems;
- Figur 3: ein Blockdiagramm zur Erläuterung eines weiteren optionalen Ausführungsdetails des erfindungsgemäßen Systems;
- Figur 4: ein Blockdiagramm zur Erläuterung eines weiteren optionalen Ausführungsdetails des erfindungsgemäßen Systems;
- Figur 5: ein Ablaufdiagramm zur Erläuterung eines Verfahrens gemäß der Erfindung;
- Figur 6: eine schematische Darstellung eines Computerprogrammprodukt gemäß der Erfindung.

Zusätzliche Merkmale, Aspekte und Vorteile der Erfindung oder ihrer Ausführungsbeispiele werden durch die ausführliche Beschreibung in Verbindung mit den Ansprüchen ersichtlich.

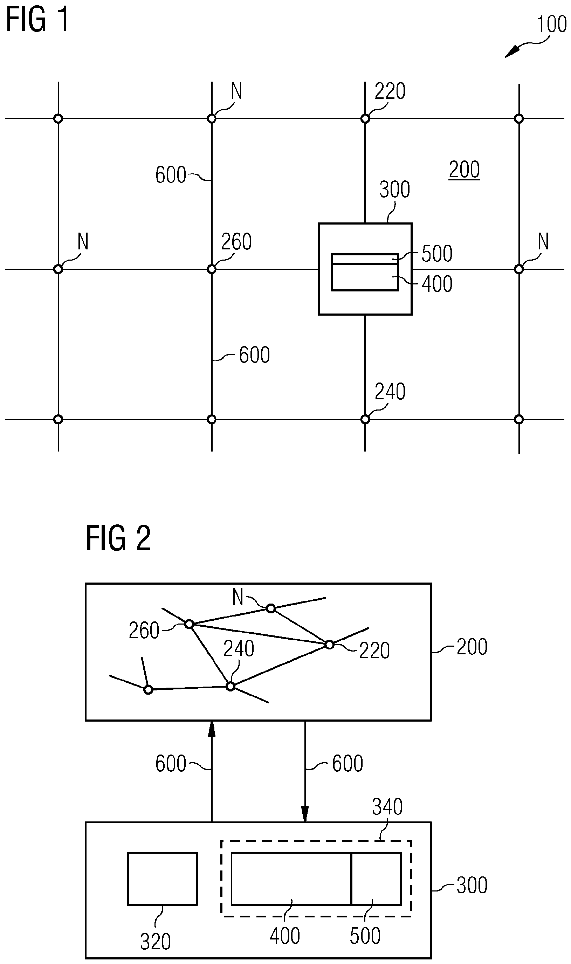

Fig. 1 zeigt ein System 100 zur Identifikation und Auswahl von Rechenknoten 220, 240, 260, ..., N in einem Netzwerk 200, wobei die Rechenknoten 220, 240, 260, ..., N hier nur beispielhaft dargestellt sind. Die Anzahl N der Rechenknoten 220, 240, 260, ..., N kann beliebig groß sein. Die Rechenknoten 220, 240, 260, ..., N können Randgeräte (edge devices) mit Rechnerleistungen, Router, Sensoren mit Softwaremodulen, Kommunikationsschnittstellen beinhalten oder es kann sich auch um Aktuatoren, Steuergeräte oder andere Hardwaregeräte handeln, die über die erforderliche Rechnerleistung verfügen. Die Rechenknoten 220, 240, 260, ..., N sind mittels Kommunikationsverbindungen 600 miteinander vernetzt und können auch mittels eines hier nicht näher dargestellten Cloud Computing Systems miteinander verbunden sein. Das Netzwerk 200 kann auch eine Industrieanlage und/oder eine Einheit wie beispielsweise einen Gebäudekomplex darstellen, die mit zumindest einigen der Rechenknoten 220, 240, 260, ..., N überwacht wird. So können einige der Rechenknoten 220, 240, 260, ..., N z.B. Temperatursensoren und Rauchmeldesensoren darstellen, die Räume in einem Gebäude überwachen.

Die Rechenknoten 220, 240, 260, ... N empfangen oder generieren Daten und verarbeiten diese mittels Softwareapplikationen für bestimmte Anwendungen. Die Softwareapplikationen können temporär entsprechend einer jeweiligen Aufgabenstellung geladen werden oder sie sind dauerhaft in Speichereinheiten in dem jeweiligen Rechenknoten 220, 240, 260, ..., N gespeichert.

Ein Planungsmodul 300 für das Abarbeiten einer Softwareapplikation 400 ist in dem Netzwerk 200 vorgesehen, das mit den verschiedenen Rechenknoten 220, 240, 260, ..., N verbunden ist. Die Softwareapplikation 400 wird jedoch nicht in dem Planungsmodul 300 selbst verarbeitet, sondern in einem der Rechenknoten 220, 240, 260, ..., N in dem Netzwerk 200. Hierzu muss jedoch ein passender Rechenknoten N identifiziert werden, der die Verarbeitung der Softwareapplikation 400 durchführt.

Ein relevantes Kriterium für die Identifizierung von geeigneten Rechenknoten N für eine rechnerische Arbeitslast einer Softwareapplikation 400 kann die Prozessorarchitektur eines Rechenknoten N sein, wie beispielsweise, ob es sich um einen ARM oder x86_64 Prozessor handelt, da die Berechnungsbefehle zu der jeweiligen Arbeitslast passen müssen. Des Weiteren sind die Größe des freien Hauptspeichers, die Größe des freien Speicherplatzes, der Grad der CPU-Auslastung und/oder die Qualität und der aktuelle Status der Netzwerkkonnektivität des Rechenknotens N wie beispielsweise die Bandbreite und die Latenz Indikatoren, um einen Rechenknoten N auszuwählen. Außerdem können die Echtzeiteigenschaften des Rechenknotens N und seines Betriebssystems sowie die spezifische Hardware, die an den Rechenknoten N angeschlossen ist, wie beispielsweise Sensoren und Aktuatoren, eine Rolle spielen.

In Fig. 2 ist das Planungsmodul 300 detaillierter dargestellt. Es enthält einen Prozessor 320 und ein Speicherelement 340, in dem die Softwareapplikation 400 und/oder die binäre Arbeitslast (Workload) gespeichert sind. Erfindungsgemäß ist die Softwareapplikation 400 und/oder die binäre Arbeitslast (Workload) mit einer Sonde 500 versehen. Die Sonde 500 ist als Softwarecode ausgebildet und enthält einen Testcode 550, der über die folgenden Eigenschaften verfügt: Der Testcode 550 kann in sehr kurzer Zeit gestartet werden, beispielsweise innerhalb weniger Millisekunden bis Sekunden, da er über eine kurze Codelänge verfügt, und wird in das Netzwerk 200 eingespeist, um die Eigenschaften von möglichen Rechenknoten N zu testen. Die Codelänge kann sehr kurz sein und beispielsweise 10-20 Zeilen umfassen, es können aber auch mehrere hundert Codezeilen vorgesehen sein. Aufgrund der Testergebnisse schlägt der Testcode 550 dann eigenständig einen Rechenknoten N oder mehrere Rechenknoten N in dem Netzwerk N vor, auf dem/denen die Softwareapplikation 400 ausgeführt werden kann. Dabei werden insbesondere Kriterien wie eine geringe Auswirkung auf die CPU-Leistung, den Speicherverbrauch und den Netzwerkverkehr verwendet.

Des Weiteren testet die Sonde 500 auch die Verfügbarkeit der erforderlichen Ressourcen für eine bestimmte Arbeitslast der Softwareapplikation 400 in dem Netzwerk 200. Falls die Ressourcen grundsätzlich nicht vorhanden sind, wird dies mittels einer Botschaft (Message) einer hier nicht dargestellten Mitteilungszentrale mitgeteilt. Die Überprüfung der Ressourcen in dem Netzwerk 200 wird vorteilhaft sehr schnell abgeschlossen, beispielsweise innerhalb weniger Millisekunden bis zu einigen Sekunden. In Einzelfällen kann es jedoch auch einige Minuten dauern.

Darüber hinaus verfügt die Sonde 500 über eine Reinigungskomponente 570 zum Reinigen des Rechenknotens N, so dass keine Artefakte auf dem Rechenknoten N verbleiben, auf dem der Test mit der Sonde 500 ausgeführt wird. Dabei kann es sich beispielsweise um Softwarebibliotheken, Speicher-Einträge und/oder Konfigurationsdateien handeln. Wenn die Sonde 500 ein positives Ergebnis anzeigt, bedeutet dies, dass ein Rechenknoten N für eine bestimmte Rechenbelastung durch eine Softwareapplikation 400 geeignet ist. Des Weiteren kann die Sonde 500 auch Codierungen etc. auf dem Rechenknoten 400 speichern oder dort hinterlassen, die für die Abarbeitung der Softwareapplikation auf dem Rechenknoten N erforderlich sind oder für die Planung einer späteren Abarbeitung auf dem Rechenknoten N notwendig sind.

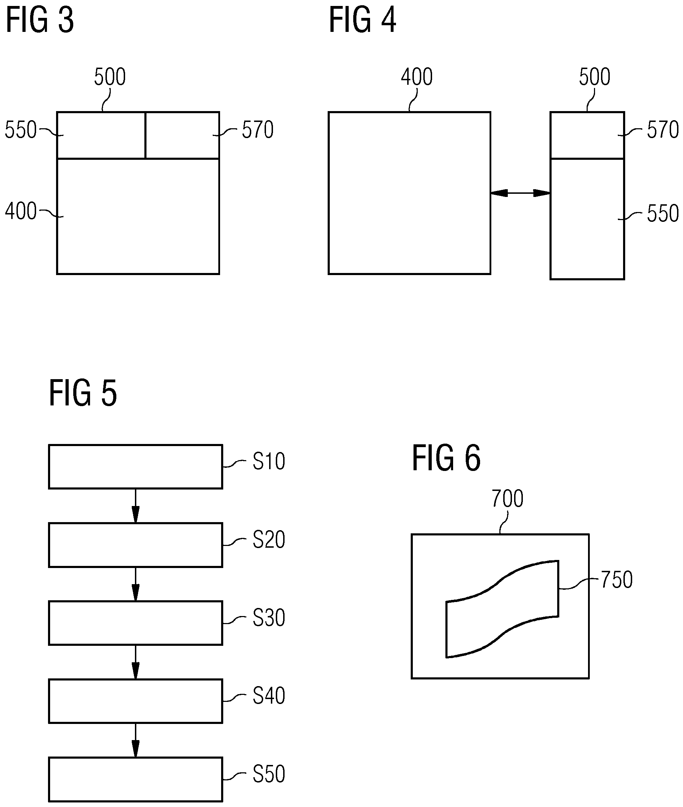

Wie in Fig. 3 dargestellt, ist die Sonde 500 direkt in der Softwareapplikation 400 vorhanden, und weist das gleiche Datenformat auf, so dass die Sonde 500 zusammen mit der Softwareapplikation 400 in das Netzwerk 200 geschickt wird.

Wenn die Arbeitslast-Binärdateien derart groß sind, dass ihre Verteilung im Netzwerk 200 erhebliche Auswirkungen auf die Leistungsfähigkeit des gesamten Netzwerkes 200 hat, kann eine Implementierung erfindungsgemäß auch dahingehend erfolgen, dass die Sonde 500 mit dem Testcode 550 vom echten Binärcode der Arbeitslast der Softwareapplikation 400 getrennt wird. Dies ist in Fig. 4 dargestellt. Da der Testcode 550 als kleines Softwareelement ausgebildet ist, kann er mit einem geringen Aufwand im Netzwerk 200 verteilt werden, und der Binärcode für eine große Arbeitslast wird nur für die Rechenknoten N bereitgestellt, die ein positives Ergebnis bei der Ausführung des Testcodes 550 zeigten.

Darüber hinaus kann in einer Weiterentwicklung der Erfindung vorgesehen sein, die Sonde 500 bzw. den Testcode 550 um ein Klassifizierungsschema zu erweitern. Die Sonde 500 kann Klassifizierungsparameter bzw. Kategorien enthalten, um sie für verschiedene Softwareapplikationen 400, die sich hinsichtlich der benötigten Rechenleistung für die Verarbeitung unterscheiden, verwenden zu können. Beispiele für Klassifizierungsparameter können sein:
- Rechenknoten N müssen über eine bestimmte Prozessorarchitektur verfügen,
- eine Berechnung erfolgt mittels einer CPU, die über eine minimale oder maximale Anzahl von CPU-Kernen verfügt,
- ein Rechenknoten N muss mindestens über eine bestimmte Anzahl an frei verfügbaren (Haupt)-Speicherplatz verfügen,
- ein Rechenknoten N muss ein bestimmtes Hardwaremerkmal aufweisen wie beispielsweise eine Echtzeituhr,
- ein Rechenknoten muss an eine bestimmte Hardware wie beispielsweise an einen Sensor angeschlossen sein.

Wie in Fig. 2 dargestellt, sendet das Planungsmodul 300 die Sonde 500 an die Rechenknoten 220, 240, 260, ... , N in dem Netzwerk 200. Nachdem die Sonde 500 mittels des Testcodes 550 die Rechenknoten 220, 240, 260,..., N getestet hat, teilt der Testcode 550 bzw. die Sonde 500 dem Planungsmodul 300 die Testergebnisse mit. Die Testergebnissen beinhalten insbesondere die Informationen über den Status der Rechenknoten N, können aber auch noch weitere Informationen umfassen. Vorzugsweise sind Funktionselemente in dem Planungsmodul 300 vorgesehen, die von dem Testcode 550 entsprechend dem jeweiligen Testergebnis aufgerufen werden, so dass das Planungsmodul 300 durch diese Funktionsaufrufe von den Testergebnissen Kenntnis erhält.

Wenn nun eine Verarbeitung einer Softwareapplikation 400 und damit die Nutzung einer Rechenleistung in dem Netzwerk 200 geplant wird, prüft das Planungsmodul 300, ob die Verarbeitung in eine oder mehrere Verarbeitungskategorien passt, für die bereits von der Sonde 500 Tests im Netzwerk 200 ausgeführt wurden entsprechend der festgelegten Klassifizierungsparameter der Sonde 500. So kann eine Verarbeitung bzw. Abarbeitung einer Softwareapplikation die folgenden Voraussetzungen benötigen: Es ist zumindest ein Dual-Core-Prozessor bei einem Rechenknoten N erforderlich und zudem werden 256 MB Speicherkapazität bei einem freien Arbeitsspeicher und 1 GB Speicherkapazität bei einem freien Festplattenspeicher benötigt.

Ein zuvor durchgeführter Test mittels der Sonde 500 hat möglicherweise geeignete Rechenknoten N mit den folgenden Spezifikationen identifiziert: Es sind zumindest ein Quad-Core-Prozessor, 512 MB Speicherkapazität bei einem freien Arbeitsspeicher und 1 GB Speicherkapazität bei einem freien Festplattenspeicher vorhanden.

Bei einer solchen Fallkonstellation könnte das Planungsmodul 300 die neue Rechenauslastung planen, ohne dass eine neue Sonde 500 in das Netzwerk 200 gesendet werden muss. Falls die benötige Rechenleistung jedoch nicht in eine der Kategorien passt, für die zuvor mittels der Sonde 500 ein Test ausgeführt wurde, führt das Planungsmodul 300 erneut einen Test hinsichtlich der verfügbaren Rechenleistung bei den Rechenknoten N in dem Netzwerk 200 durch.

Des Weiteren ist es möglich, dass für eine bestimmte Abarbeitung einer Softwareapplikation eine erforderliche Rechenleistung klassifiziert wird, jedoch die Arbeitslast dieser Softwareapplikation weitere zusätzliche individuelle Anforderungen aufweist, die nicht in eine vorbestimmte Kategorie eingeordnet werden können. In diesem Fall führt das Planungsmodul 300 vorzugsweise den Arbeitslast-Test nur auf Rechenknoten N durch, die in die bereits klassifizierte Kategorie fallen.

Gemäß der vorliegenden Erfindung werden somit mittels einer Sonde 500 Tests bezüglich der Abarbeitungskapazitäten von Rechenknoten N für eine Arbeitslast durchgeführt, wobei die Rechenknoten N in einem heterogenen Netzwerk 200 angeordnet sind und über unterschiedliche Eigenschaften und Auslastungen verfügen. Darüber hinaus ist ein Klassifizierungsschema für eine Arbeitslast vorgesehen, die die Planbarkeit der Abarbeitung einer Softwareapplikation an verschiedenen Rechenknoten N vereinfacht.

Hierdurch kann die Verwendung von ungeeigneten Rechenknoten N für die Abarbeitung einer Softwareapplikation vermieden werden. Ungeeignete Rechenknoten N führen zu einer Belastung des Netzwerks 200 und zu einem Mehraufwand, bis ein geeigneter Rechenknoten N für eine Arbeitslast identifiziert werden kann. Die versehentliche Ausführung einer Arbeitslast auf einem ungeeigneten Rechenknoten N kann auch zu Schäden führen, da beispielsweise eine Echtzeitaufgabe auf einem Rechenknoten N negativ beeinflusst wird, wenn er bereits mit einer anderen Rechenaufgabe ausgelastet ist.

Darüber hinaus bietet die Sonde 500 die Möglichkeit, schnell und mit wenig Aufwand geeignete Rechenknoten N für eine Arbeitslast zuverlässig zu finden. Die Auslastung des Netzwerks 200 wird insgesamt optimiert, indem Arbeitslasten klassifiziert werden und eine Dokumentation über die Testergebnisse für verschiedenen Arbeitslastkategorien durchgeführt wird. Vorzugsweise ist diese Dokumentation in dem Planungsmodul 300 gespeichert.

Darüber hinaus ist es auch möglich, dass die Sonde 500 mit dem Testcode 550 nur an eine Auswahl von Rechenknoten N, die beispielsweise bereits von Entwicklern und Operateuren festgelegt worden sind, gesendet wird. Das Planungsmodul 300 führt dann eine Zuordnung zwischen den vorbestimmten Rechenknoten N und den Arbeitslastkategorien durch und die Arbeitslast wird nur auf den Rechenknoten N ausgeführt, die aufgrund dieser Zuordnung berücksichtigt werden.

Fig. 5 zeigt ein Ablaufdiagramm eines erfindungsgemäßen Verfahrens zur Identifizierung von Rechenknoten N für die Bearbeitung einer Arbeitslast in einem Netzwerk 200.

In einem Schritt S10 schickt das Planungsmodul 300 eine Sonde 500 an Rechenknoten 220, 240, 260, ..., N des Netzwerks 200, wobei die Sonde 500 einen Testcode 550 zum Testen der Eigenschaften der Rechenknoten 220, 240, 260, ..., N enthält.

In einem Schritt S20 testet der Testcode 550 der Sonde 500 die Eigenschaften der Rechenknoten 220, 240, 260, ..., N hinsichtlich ihrer Fähigkeit, eine bestimmte Arbeitslast zumindest einer Softwareapplikation 400 abzuarbeiten.

In einem Schritt S30 teilt der Testcode 550 dem Planungsmodul 300 die Testergebnisse mit.

In einem Schritt S40 wählt das Planungsmodul 300 aufgrund der Testergebnisse des Testcodes 550 einen oder mehrere Rechenknoten N zum Abarbeiten einer Arbeitslast zumindest einer Software Applikationen 400 aus.

In einem Schritt S50 startet das Planungsmodul 300 auf dem ausgewählten Rechenknoten N das Abarbeiten der Arbeitslast der zumindest einen Softwareapplikation 400.

Fig. 6 stellt schematisch ein Computerprogrammprodukt 700 dar, das einen und/der mehrere ausführbare Computercodes 750 enthält, der(die) ausgebildet ist(sind) (z.B. durch einen Computer, ein Verfahren gemäß einer Ausführungsform des ersten Aspekts der Erfindung durchzuführen.

Durch die vorliegende Erfindung kann somit eine Identifikation von geeigneten Rechenknoten N für eine bestimmte Arbeitslast einer Softwareapplikation in einem Netzwerk 200 bestehend aus Rechenknoten 220, 240, 260, ..., N durchgeführt werden. Hierdurch können gezielt Rechenknoten N in dem Netzwerk 200 ausgewählt werden, die für die Abarbeitung einer Arbeitslast geeignet sind, und damit kann eine Überlastung des Netzwerks 200 vermieden werden.

### Bezugszeichenliste

- 100: System
- 200: Netzwerk
- 220: Rechenknoten
- 240: Rechenknoten
- 260: Rechenknoten
- 300: Planungsmodul
- 320: Prozessor
- 340: Speicher
- 400: Softwareapplikation
- 500: Sonde
- 550: Testcode
- 570: Reinigungskomponente
- 600: Kommunikationsverbindungen
- 700: Computerprogrammprodukt
- 750: Computercode

## Patentansprüche

1. Ein System (100) zum Auffinden und Identifizieren von Rechenknoten N in einem Netzwerk (200), wobei das System (100) aus einem Netzwerk (200) mit mehreren Rechenknoten (220, 240, 260, ... Z), die mittels Kommunikationsverbindungen (600) miteinander verbunden sind und ausgebildet sind, eine Arbeitslast einer oder mehrerer Softwareapplikation(en) (400) abzuarbeiten, und zumindest einem Planungsmodul (300) besteht, wobei das Planungsmodul (300) zumindest eine als Softwarecode ausgebildete Sonde (500) mit einem Testcode (550) enthält und ausgebildet ist, die Sonde (500) mit dem Testcode (550) an die Rechenknoten (220, 240, 260, ... , N) des Netzwerks (200) zu schicken zum Testen der Eigenschaften der Rechenknoten (220, 240, 260, ..., N), wobei der Testcode (550) ausgebildet ist, die Eigenschaften der Rechenknoten (220, 240, 260, ..., N) hinsichtlich ihrer Fähigkeit, eine bestimmte Arbeitslast zumindest einer Softwareapplikation (400) abzuarbeiten, zu testen, und wobei der Testcode (550) ausgebildet ist, dem Planungsmodul (300) die Testergebnisse mitzuteilen, wobei das Planungsmodul (300) ausgebildet ist, aufgrund der Testergebnisse des Testcodes (550) einen oder mehrere Rechenknoten (N) zum Abarbeiten der Arbeitslast zumindest einer Softwareapplikation (400) auszuwählen, und auf dem ausgewählten Rechenknoten das Abarbeiten der Arbeitslast der zumindest einen Softwareapplikation (400) (N) zu starten,
**dadurch gekennzeichnet, dass**
die Sonde (500) in die Softwareapplikation (400) integriert ist und das Planungsmodul (300) geeignet ist, die Softwareapplikation (400) mit der Sonde (500) an die Rechenknoten (220, 240, 260, ... , N) zu schicken.

2. Das System (100) nach Anspruch 1, **dadurch gekennzeichnet, dass** die Sonde (500) ein Klassifizierungsschema mit verschiedenen Kategorien für die Klassifizierung der Rechenknoten (220, 240, 260, ..., N) enthält und die Sonde (500) ausgebildet ist, die Rechenknoten (220, 240, 260, ..., N) mittels dieses Klassifizierungsschemas zu testen.

3. Das System (100) nach einem der Ansprüche 1 oder 2, **dadurch gekennzeichnet, dass** das Planungsmodul (300) geeignet ist, unterschiedliche Softwareapplikationen (400) anhand der Testergebnisse der Sonde (500) für die Arbeitslast der unterschiedlichen Softwareapplikationen (400) in einer Sequenz unter Verwendung verschiedener Rechenknoten (220, 240, 260, ..., N) abzuarbeiten.

4. Ein Verfahren zum Auffinden und Identifizieren von Rechenknoten N in einem Netzwerk (200), wobei das System (100) aus einem Netzwerk (200) mit mehreren Rechenknoten (220, 240, 260, ... Z), die mittels Kommunikationsverbindungen (600) miteinander verbunden sind und ausgebildet sind, eine Arbeitslast einer oder mehrerer Softwareapplikation(en) (400) abzuarbeiten, und zumindest einem Planungsmodul (300) besteht, wobei das Planungsmodul (300) zumindest eine als Softwarecode ausgebildete Sonde (500) mit einem Testcode (550) enthält, umfassend:
- das Planungsmodul (300) sendet (S10) die Sonde (500) mit dem Testcode (550) an die Rechenknoten (220, 240, 260, ... , N) des Netzwerks (200) zum Testen der Eigenschaften der Rechenknoten (220, 240, 260, ..., N);
- der Testcode (550) testet (S20) die Eigenschaften der Rechenknoten (220, 240, 260, ..., N) hinsichtlich ihrer Fähigkeit, eine bestimmte Arbeitslast zumindest einer Softwareapplikation (400) abzuarbeiten;
- der Testcode (550) teilt dem Planungsmodul die Testergebnisse mit;
- das Planungsmodul (300) wählt (S40) aufgrund der Testergebnisse des Testcodes (550) einen oder mehrere Rechenknoten (N) zum Abarbeiten der Arbeitslast zumindest einer Softwareapplikation (400) aus;
- das Planungsmodul (300) startet auf dem ausgewählten Rechenknoten (N) das Abarbeiten der Arbeitslast der zumindest einen Softwareapplikation (400),
**dadurch gekennzeichnet, dass**
die Sonde (500) in die Softwareapplikation (400) integriert ist und das Planungsmodul (300) die Softwareapplikation (400) mit der Sonde (500) an die Rechenknoten (220, 240, 260, ... , N) schickt.

5. Das Verfahren nach Anspruch 4, **dadurch gekennzeichnet, dass** die Sonde (500) ein Klassifizierungsschema mit verschiedenen Kategorien für die Klassifizierung der Rechenknoten (220, 240, 260, ..., N) enthält und die Sonde (500) die Rechenknoten (220, 240, 260, ..., N) mittels dieses Klassifizierungsschemas testet.

6. Das Verfahren nach einem der Ansprüche 4 oder 5, **dadurch gekennzeichnet, dass** das Planungsmodul (300) unterschiedliche Softwareapplikationen (400) anhand der Testergebnisse der Sonde (500) für die Arbeitslast der unterschiedlichen Softwareapplikationen (400) in einer Sequenz unter Verwendung verschiedener Rechenknoten (220, 240, 260, ..., N) abarbeitet.

7. Ein Computerprogrammprodukt (700), umfassend Befehle, die bei der Ausführung des Programms durch einen Computer diesen veranlassen, das Verfahren nach einem der Ansprüche 5 bis 6 auszuführen.

## Claims

1. System (100) for finding and identifying computing nodes N in a network (200), wherein the system (100) consists of a network (200) with a plurality of computing nodes (220, 240, 260, ... Z), which are connected to one another by means of communication connections (600) and are designed to execute a workload of one or more software applications (400), and at least one scheduling module (300), wherein the scheduling module (300) contains at least one probe (500), which is in the form of software code, with a test code (550) and is designed to send the probe (500) with the test code (550) to the computing nodes (220, 240, 260, ..., N) of the network (200) in order to test the properties of the computing nodes (220, 240, 260, ..., N), wherein the test code (550) is designed to test the properties of the computing nodes (220, 240, 260, ..., N) in respect of their capability to execute a particular workload of at least one software application (400), and wherein the test code (550) is designed to inform the scheduling module (300) of the test results, wherein the scheduling module (300) is designed to select, on the basis of the test results of the test code (550), one or more computing nodes (N) for executing the workload of at least one software application (400) and to start the execution of the workload of the at least one software application (400) at the selected computing node (N), **characterized in that**
the probe (500) is integrated in the software application (400), and the scheduling module (300) is suitable for sending the software application (400) with the probe (500) to the computing nodes (220, 240, 260, ..., N).

2. System (100) according to Claim 1, **characterized in that** the probe (500) contains a classification scheme with various categories for classifying the computing nodes (220, 240, 260, ..., N), and the probe (500) is designed to test the computing nodes (220, 240, 260, ..., N) by means of this classification scheme.

3. System (100) according to either one of Claims 1 and 2, **characterized in that** the scheduling module (300) is suitable for executing various software applications (400) in a sequence by using various computing nodes (220, 240, 260, ..., N) on the basis of the test results of the probe (500) for the workload of the various software applications (400).

4. Method for finding and identifying computing nodes N in a network (200), wherein the system (100) consists of a network (200) with a plurality of computing nodes (220, 240, 260, ... Z), which are connected to one another by means of communication connections (600) and are designed to execute a workload of one or more software applications (400), and at least one scheduling module (300), wherein the scheduling module (300) contains at least one probe (500), which is in the form of software code, with a test code (550), in which method:
- the scheduling module (300) sends (S10) the probe (500) with the test code (550) to the computing nodes (220, 240, 260, ..., N) of the network (200) in order to test the properties of the computing nodes (220, 240, 260, ..., N);
- the test code (550) tests (S20) the properties of the computing nodes (220, 240, 260, ..., N) in respect of their capability to execute a particular workload of at least one software application (400);
- the test code (550) informs the scheduling module of the test results;
- the scheduling module (300) selects (S40), on the basis of the test results of the test code (550), one or more computing nodes (N) for executing the workload of at least one software application (400);
- the scheduling module (300) starts the execution of the workload of the at least one software application (400) at the selected computing node (N),
**characterized in that**
the probe (500) is integrated in the software application (400), and the scheduling module (300) sends the software application (400) with the probe (500) to the computing nodes (220, 240, 260, ..., N) .

5. Method according to Claim 4, **characterized in that** the probe (500) contains a classification scheme with various categories for classifying the computing nodes (220, 240, 260, ..., N), and the probe (500) tests the computing nodes (220, 240, 260, ..., N) by means of this classification scheme.

6. Method according to either one of Claims 4 and 5, **characterized in that** the scheduling module (300) executes various software applications (400) in a sequence by using various computing nodes (220, 240, 260, ..., N) on the basis of the test results of the probe (500) for the workload of the various software applications (400).

7. Computer program product (700) comprising instructions, which, when the program is run by a computer, prompt said computer to perform the method according to either one of Claims 5 and 6.

## Revendications

1. Système (100) permettant de détecter et d'identifier des nœuds de calcul N dans un réseau (200), dans lequel le système (100) se compose d'un réseau (200) avec plusieurs nœuds de calcul (220, 240, 260, ..., Z) qui sont reliés les uns aux autres au moyen de liaisons de communication (600) et sont réalisés pour exécuter une charge de travail d'une ou plusieurs applications logicielles (400), et d'au moins un module de planification (300), dans lequel le module de planification (300) contient au moins une sonde (500) réalisée en tant que code de logiciel avec un code de test (550) et est réalisé pour envoyer la sonde (500) avec le code de test (550) aux nœuds de calcul (220, 240, 260, ..., N) du réseau (200) pour tester les propriétés des nœuds de calcul (220, 240, 260, ..., N), dans lequel le test de code (550) est réalisé pour tester les propriétés des nœuds de calcul (220, 240, 260, ..., N) en ce qui concerne leur aptitude à exécuter une charge de travail déterminée d'au moins une application logicielle (400), et dans lequel le code de test (550) est réalisé pour communiquer au module de planification (300) les résultats de test, dans lequel le module de planification (300) est réalisé, en raison des résultats de test du code de test (550) pour sélectionner un ou plusieurs nœuds de calcul (N) permettant d'exécuter la charge de travail d'au moins une application logicielle (400), et de démarrer l'exécution de la charge de travail de l'au moins une application logicielle (400) (N) sur le nœud de calcul sélectionné,
**caractérisé en ce que**
la sonde (500) est intégrée dans l'application logicielle (400) et le module de planification (300) est adapté pour envoyer l'application logicielle (400) avec la sonde (500) aux nœuds de calcul (220, 240, 260, ..., N).

2. Système (100) selon la revendication 1, **caractérisé en ce que** la sonde (500) contient un schéma de classification avec différentes catégories pour la classification des nœuds de calcul (220, 240, 260, ..., N) et la sonde (500) est réalisée pour tester les nœuds de calcul (220, 240, 260, ..., N) au moyen de ce schéma de classification.

3. Système (100) selon l'une quelconque des revendications 1 ou 2, **caractérisé en ce que** le module de planification (300) est adapté pour exécuter différentes applications logicielles (400) à l'aide des résultats de test de la sonde (500) pour la charge de travail des différentes applications logicielles (400) dans une séquence en utilisant différents nœuds de calcul (220, 240, 260, ..., N).

4. Procédé permettant de détecter et d'identifier des nœuds de calcul N dans un réseau (200), dans lequel le système (100) se compose d'un réseau (200) avec plusieurs nœuds de calcul (220, 240, 260, ... Z) qui sont reliés les uns avec les autres au moyen de liaisons de communication (600) et sont réalisés pour exécuter une charge de travail d'une ou plusieurs applications logicielles (400), et au moins d'un module de planification (300), dans lequel le module de planification (300) contient au moins une sonde réalisée en tant que code de logiciel avec un code de test (550), comprenant :
- le module de planification (300) envoie (S10) la sonde (500) avec le code de test (550) aux nœuds de calcul (220, 240, 260, ..., N) du réseau (200) afin de tester les propriétés des nœuds de calcul (220, 240, 260, ..., N) ;
- le code de test (550) teste (S20) les propriétés des nœuds de calcul (220, 240, 260, ..., N) en ce qui concerne leur aptitude à exécuter une charge de travail déterminée d'au moins une application logicielle (400) ;
- le code de test (550) communique les résultats de test au module de planification ;
- le module de planification (300) sélectionne (S40) sur la base des résultats de test du code de test (550) un ou plusieurs nœuds de calcul (N) permettant d'exécuter la charge de travail d'au moins une application logicielle (400) ;
- le module de planification (300) démarre sur le nœud de calcul (N) sélectionné l'exécution de la charge de travail de l'au moins une application logicielle (400),
**caractérisé en ce que**
la sonde (500) est intégrée dans l'application logicielle (400) et le module de planification (300) envoie l'application logicielle (400) avec la sonde (500) aux nœuds de calcul (220, 240, 260, ..., N).

5. Procédé selon la revendication 4, **caractérisé en ce que** la sonde (500) contient un schéma de classification avec différentes catégories pour la classification des nœuds de calcul (220, 240, 260, ..., N) et la sonde (500) teste les nœuds de calcul (220, 240, 260, ..., N) au moyen de ce schéma de classification.

6. Procédé selon l'une quelconque des revendications 4 ou 5, **caractérisé en ce que** le module de planification (300) exécute différentes applications logicielles (400) à l'aide des résultats de test de la sonde (500) pour la charge de travail des différentes applications logicielles (400) dans une séquence en utilisant différents nœuds de calcul (220, 240, 260, ..., N).

7. Produit de programme informatique (700), comprenant des instructions qui amènent, lors de l'exécution du programme par le biais d'un ordinateur, celui-ci à réaliser le procédé selon l'une quelconque des revendications 5 à 6.
